# EUROPEAN PATENT SPECIFICATION

(11) **EP 2 842 801 B1**
(45) Date of publication and mention of the grant of the patent: **25.10.2017**
(21) Application number: 12177279.2
(22) Date of filing: 20.07.2012
(51) Int. Cl.: B60N 2/46

(54) **An armrest mechanism**
Armstützenmechanismus
Mécanisme d'accoudoir

(30) Priority: 03.04.2012 TR 201203773 U
(43) Date of publication of application: 04.03.2015
(73) Proprietor: Inova Koltuk Sistemleri Arac Tasarimi Otomotiv San. Ve Tic. A.S., Bursa (TR)
(72) Inventor: Menemen, Batu, Bursa (TR)
(74) Representative: Sezgin, Hatice Özlem

(56) References cited:
- EP-A1- 0 655 365
- US-A1- 2004 135 419

## Description

### TECHNICAL FIELD

The present invention relates to an armrest mechanism, which switches an armrest handle, used in seats, between a closed position and a usage position.

### PRIOR ART

Today, armrest mechanisms are used in seats. The common property of said armrest mechanisms is that they exist in a position so as not to narrow the passage during the passage of the user to the seat, and that they take the suitable position for the user in order for the user to put his/her arm during seating of the user.

There are pluralities of mechanisms performing said position change. In the firstly designed mechanisms, the armrest is provided next to the back part of the seat. They perform the function thereof by taking vertical and horizontal positions. The disadvantage of said mechanism is that the armrest forms a tab outside of the seat. In another mechanism designed afterwards, the armrest performs rotational movement outwardly from the support position, and it is lowered next to the seat and it passed to a position where the lateral side of the seat is open. The disadvantage of this system is that since the rotation movement is outwards, the operation is impossible in some cases.

By taking these disadvantages into consideration, armrest mechanisms are described which are moving without projecting much from the seat. The biggest disadvantage of these mechanisms is that they have pluralities of pieces and they comprise pieces like spring mechanisms which become corrupted after certain usage duration. The repair or change of the items, which are corrupted inside a multi-piece structure, becomes difficult and expensive.

Document EP0655365A1 discloses an armrest mechanism according to the preamble of claim 1. As a result, because of the abovementioned problems, an improvement is required in the related technical field.

### BRIEF DESCRIPTION OF THE INVENTION

The present invention relates to an armrest mechanism which can move the armrest handle used in seats between a closed position, a first passage position, a second passage position and a support position, in order to eliminate the abovementioned problems and to bring new advantages to the related technical field.

The main object of the present invention is to provide an armrest mechanism whose assembly can be performed in an easy manner comprising pieces as small as possible in number.

Another object of the present invention is to provide a resistant armrest mechanism whose maintenance can be easily performed.

In order to realize all of the abovementioned objects and the objects which are to be obtained from the detailed description below, the present invention is an armrest mechanism according to claim 1. In a preferred embodiment of the subject matter invention, the carrying group comprises a connection plate providing the connection of the carrying group to the chassis; and said connection plate comprises at least one assembly hole.

In another preferred embodiment of the subject matter invention, the connection plate comprises at least one chassis bolt providing the connection of the connection plate to the chassis in a removable manner.

In another preferred embodiment of the subject matter invention, a rotation shaft is provided on the connection plate and a centering hole is provided determining the position provided by said rotation shaft.

In another preferred embodiment of the subject matter invention, on the connection plate, there is a centering hole determining the position where the cam shaft is provided.

In another preferred embodiment of the subject matter invention, a bearing hole, which is connected to said handle group, is provided on the inner plate.

In another preferred embodiment of the subject matter invention, the rotation shaft comprises a centering end on the side in connection to the connection plate; a bearing which will seat to said bearing hole on the other side; and a bearing end where said bearing is provided.

In another preferred embodiment of the subject matter invention, the cam shaft comprises a centering end on the side thereof in connection to the connection plate; and a cam connection end where the cam will be provided on the other side thereof.

In another preferred embodiment of the subject matter invention, on said cam connection end, there is a segment housing and there is a segment preventing the removal of the cam from the place thereof.

In another preferred embodiment of the subject matter invention, there is at least one bolt providing the assembly of the handle group to the carrying group and there is a support washer provided between said bolt and the inner plate.

In another preferred embodiment of the subject matter invention, said support washer is embodied such that the support washer will cover the surface of the cam on the segment side. Thus, in cases where the mechanism is under stress, the cam continues the movement thereof in the guide opening.

In another preferred embodiment of the subject matter invention, the guide opening comprises a closed position region which directs the movement of the cam; a support region extending at the continuation of the closed position region; a turning region extending at the continuation thereof; a passage corner extending at the continuation; a passage region extending at the continuation; and a passage tab extending at the end thereof.

In another preferred embodiment of the subject matter invention, the cam is provided in the form of a parallelogram whose corners are rounded and the cam comprises two corner parts which are acute angled.

In another preferred embodiment of the subject matter invention, the butterfly cam is embodied in a butterfly form and it comprises four corner parts which are acute angled.

In another preferred embodiment of the subject matter invention, said seat is a passenger seat.

### BRIEF DESCRIPTION OF THE FIGURES

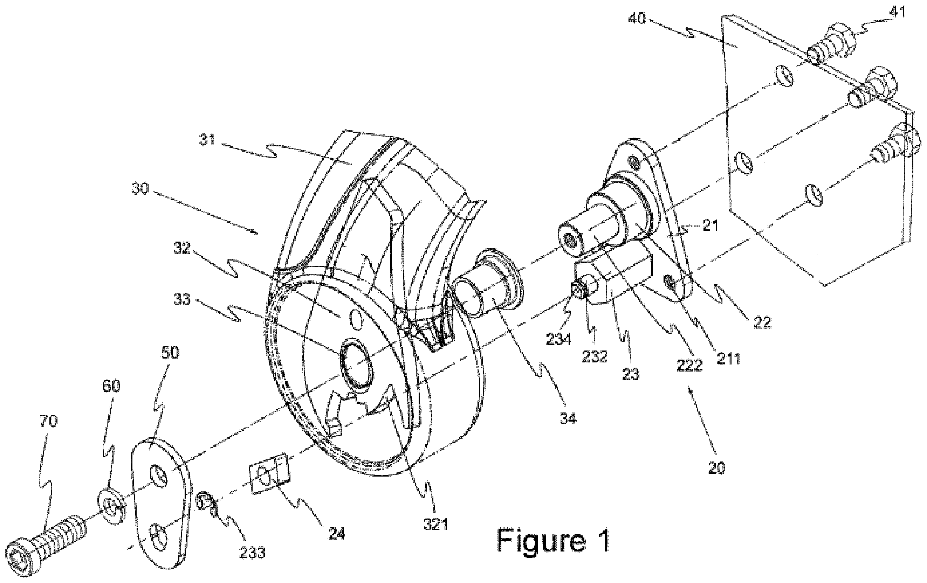

In Figure 1, a general view of the armrest mechanism is given.

In Figure 2, the views of inner plate and of the cam are given at different positions of the armrest mechanism.

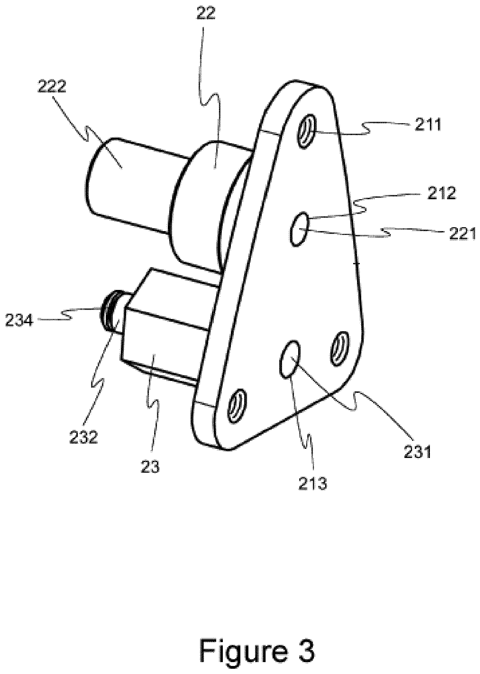

In Figure 3, a general view of the carrying group is given from the side assembled to the chassis.

In Figure 4, a general view of the butterfly cam and of the inner plate is given.

### REFERENCE NUMBERS

10 Armrest mechanism
20 Carrying group
   21 Connection plate
      211 Assembly hole
      212 Centering hole
      213 Centering hole
   22 Rotation shaft
      221 Centering end
      222 Bearing end
   23 Cam shaft
      231 Centering end
      232 Connection end
      233 Segment
      234 Segment housing
   24 Cam
      24a Corner part
      24b Corner part
      241 Butterfly cam
30 Handle group
   31 Handle
   32 Inner plate
      321 Guide opening
      321a Closed position region
      321b Passage region
      321c Support region
      321d Turning region
      321e Passage tab
      321f Passage corner
   33 Bearing hole
   34 Bearing
40 Chassis
   41 Chassis bolt
50 Support Washer
   51 Assembly hole
   52 Segment hole
60 Springy washer
70 Bolt
I Closed position
II First passage position
III Support position
IV Second support position

### THE DETAILED DESCRIPTION OF THE INVENTION

In this detailed description, the subject matter armrest mechanism is explained with references to examples without forming any restrictive effect in order to make the subject matter more understandable.

In this detailed description, an armrest mechanism is described which is used for a seat, for instance a sofa, box seat, vehicle seat, student seat, comprising a seating region; a chassis carrying said seating region; and a resting region provided in a vertical manner to the seating region.

Said armrest mechanism (10) comprises a carrying group (20) and a handle group (30). Said carrying group (20) comprises a connection plate (21) providing the assembly of the armrest mechanism (10) to the seat chassis (40); a rotation shaft (22) said handle group (30) is connected thereto; a cam shaft (23) the cam (24) is connected thereto which delimits the movement of said handle group (30). Said connection plate (21) is embodied in a triangular plate form whose corners are curved. There are assembly holes (211) which will provide assembly to the fixed chassis (40) from the vicinity of said corners. Moreover, in order to prevent sliding of the rotation shaft (22) and of the cam shaft (23) during the assembly by means of welding, there is a rotation shaft centering hole (212) and there is a cam shaft centering hole (213).

Said cam shaft (23) has a hexagonal cross sectioned structure, said cam shaft (23) comprises a centering end (231) such that one end thereof will seat to said centering hole (212) on the connection plate (21). The other end of the cam shaft (23) is a cam connection end (232), and there is a cam (24) positioned thereon; there is a segment (233) preventing the removal of said cam (24) and there is a segment housing (234) said segment is to be fixed thereto. The cam (24) ends are provided in the form of a rounded parallelogram. Since the cam (24) is easily accessible from outside and since a segment (233) is used in the connection, a mechanism is provided which is easily changeable in case of any failure which may occur in the cam (24). Moreover, since the cam (24) is provided in the form of a parallelogram, a cam (24) is provided whose production is easy and which can function in both directions.

Said rotation shaft (22) has a cylindrical structure and one side thereof comprises centering end (221) which will seat to the centering hole (212) on the connection plate (21). The other end of the rotation shaft (22) comprises a rotation shaft bearing end (222) where the handle group (30) is to be bedded.

The handle group (30) comprises a handle (31); and an inner plate (32) placed therein during the production of the handle (31) by means of plastic injection. The handle group (30) is provided in a symmetrical manner and it can be used as right and left depending on the assembly direction. Said inner plate (32) comprises a guide opening (321) where the handle (31) of the armrest mechanism (10) delimits the movement of the cam (23) between a closed position (I), a support position (III) and passage positions (II-IV). The rotation of the cam (23) around the own axis thereof is provided by means of the tabs provided in said guide opening (321). A bearing (34), which is made of POM material, is fixed to the bearing hole (33) provided at a vicinity of the middle region of the inner plate (32), in order to prevent the abrasions occurring during the movement of the mechanism. The handle group (30), which is bedded on the rotation shaft (22) to the carrying group (20) by means of said bearing (34), is fixed by means of a bolt (70). In order to prevent the loosening of said bolt (70) during the movement of the handle, a support washer (50) and a springy washer (60) are used as assembly members. While the armrest (30) is assembled by means of a bolt (70) fixed through an assembly hole (51) provided on said support washer (50), at the same time, it prevents the cam (24) to be seated onto the cam shaft (23) and prevents the cam (24) from exiting through the guide opening (321) in case a force is applied. The segment hole (52), provided on the support washer (50), provides the contact of the support washer (50) to the cam (24) as the segment (233) enters into said segment hole (52).

The inner plate (32), which is made of round metal material having a tab on one side, comprises a non-linear guide opening (321) which is similar to the fork key inlet. This opening comprises a closed position region (321a) provided as a triangular recess on one side; a curved line extending at the continuation of said recess; a support region (321c) provided as a recess of approximately ninety degrees at the continuation thereof; turning region (321d) formed by means of a recess in the same manner afterwards; a tab beginning with an angle of forty five degrees at the continuation thereof; a passage corner (321f) provided by a chamfer broken corner afterwards; a closed position region (321b) formed by a rectangular recess extending at the continuation thereof; and a passage tab (321e) provided by a trapezoidal tab.

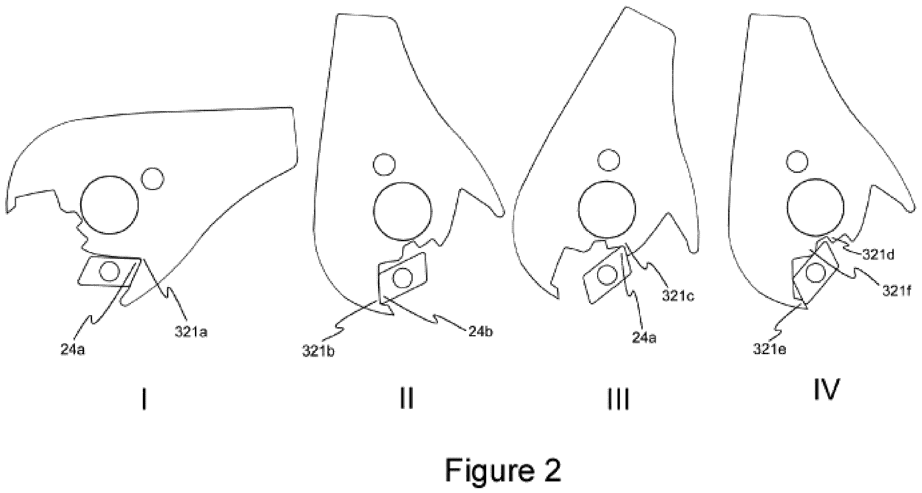

In Figure 2, the positions of the cam (24) and of the inner plate (32) at different positions of the armrest mechanism (10) are illustrated. In the closed position (I) of the armrest mechanism (10), one (24a) of the two acute-angled corners of the cam (24) is rested to the closed position region (321a) provided in the guide opening (321). In order to take the armrest to the support position (III), the handle (31) is turned in the counter-clockwise direction in the rotation shaft (22) axis and the handle (31) is taken to the first passage position (II). In said first passage position (II), the other corner part (24b) of the cam (24) is rested to the passage region (321b) provided in the guide opening (321). By means of this movement, a small rotation of the cam (24) in the counter-clockwise direction is provided. In the next step, in order for the armrest mechanism (10) to take the support position (III), the handle (31) is turned in the clockwise direction, and by means of this, the acute-angled corner (24a) of the cam (24) is rested onto the support region (321c) provided in the guide opening (321) and the armrest mechanism (10) takes the support position (III).

In order to take the armrest mechanism (10) to the closed position (I) again, first of all, the handle (31) is turned in the counter-clockwise direction and it is brought to the second passage position (IV). In this position, the short edge of the cam (24) is rested onto the passage tab (321e) provided in the guide opening (321); and the long edge of the cam (24) is rested onto the passage corner (321f) provided in the guide opening (321). During the passage from the second passage position (IV) to the closed position (I), as a result of the movement of the handle in the clockwise direction, the corner part (24a) of the cam is rested onto the turning region (321d) provided in the guide opening (321) and it provides the cam (24) to complete the rotation performed by the cam (24) in the clockwise direction. As the handle (31) completes the movement thereof, the armrest mechanism (10) reaches the closed position (I).

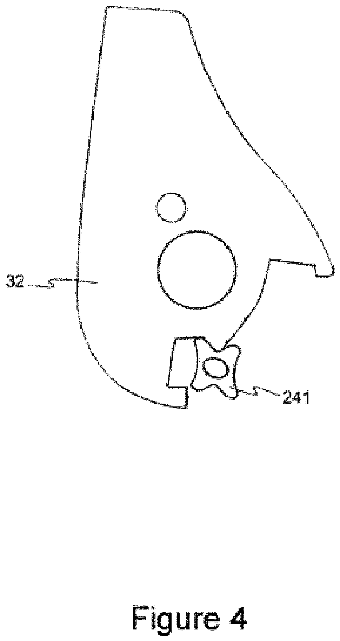

In the alternative embodiment of the present invention, the guide opening can be embodied in different forms depending on the cam and on the shape of the cam. With reference to Figure 4, the butterfly cam (241) can be embodied in a similar manner to a butterfly with four corners. The guide opening is embodied in a dependent manner on the shape of said cam (241). The mechanism moves between the closed position, first passage position, second passage position and the support position without any change in the operation principle.

The protection scope of the present invention is set forth in the annexed Claims and cannot be restricted to the illustrative disclosures given above, under the detailed description. It is because a person skilled in the relevant art can obviously produce similar embodiments under the light of the claims, without departing from the main principles of the present invention.

## Claims

1. An armrest mechanism (10) comprising a cam (24), which can switch the armrest handle (31) used in seats, between a closed position (I), a first passage position (II), a second passage position (IV) and a support position (III); and a guide opening (321) directing the movement of said cam (24), **characterized in that** said armrest mechanism comprises a cam shaft (23) whereon the cam (24) is positioned in a manner that the cam (24) is rotatable around the own axis a carrying group (20) whereto said cam shaft (23) is connected and which is in connection to the chassis (40); and an inner plate (32) whereon said guide opening (321) is provided and which is provided on an handle group (30).

2. An armrest mechanism (10) according to Claim 1, **characterized in that** the carrying group (20) comprises a connection plate (21) providing the connection of the carrying group (20) to the chassis (40); and said connection plate (21) comprises at least one assembly hole (211).

3. An armrest mechanism (10) according to Claim 2, **characterized in that** the connection plate (21) comprises at least one chassis bolt (41) providing the connection of the connection plate (21) to the chassis (40) in a removable manner.

4. An armrest mechanism (10) according to Claim 2, **characterized in that** a rotation shaft (22) is provided on the connection plate (21) and a centering hole (212) is provided determining the position provided by said rotation shaft (22).

5. An armrest mechanism (10) according to Claim 2, **characterized in that** on the connection plate (21), there is a centering hole (213) determining the position where the cam shaft (23) is provided.

6. An armrest mechanism (10) according to Claim 1, **characterized in that** a bearing hole (33), which is connected to said handle group, is provided on the inner plate (32).

7. An armrest mechanism (10) according to any one of the preceding claims, **characterized in that** the rotation shaft (22) comprises a centering end (221) on the side in connection to the connection plate (21); a bearing (34) which will seat to said bearing hole (33) on the other side; and a bearing end (222) where said bearing (34) is provided.

8. An armrest mechanism (10) according to Claim 1, **characterized in that** the cam shaft (23) comprises a centering end (231) on the side thereof in connection to the connection plate (21); and a cam connection end (232) where the cam (24) will be provided on the other side thereof.

9. An armrest mechanism (10) according to Claim 8, **characterized in that** on said cam connection end (232), there is a segment housing (234) and there is a segment (233) preventing the removal of the cam (24) from the place thereof.

10. An armrest mechanism (10) according to Claim 1, **characterized in that** there is at least one bolt (70) providing the assembly of the handle group (30) to the carrying group (20) and there is a support washer (50) provided between said bolt (70) and the inner plate (32).

11. An armrest mechanism (10) according to Claim 10, **characterized in that** said support washer (50) is embodied such that the support washer (50) will cover the surface of the cam (24) on the segment (233) side.

12. An armrest mechanism according to Claim 1, **characterized in that** the guide opening (321) comprises a closed position region (321a) which directs the movement of the cam (24); a support region (321c) extending at the continuation of the closed position region (321a); a turning region (321d) extending at the continuation thereof; a passage corner (321f) extending at the continuation; a passage region (321b) extending at the continuation; and a passage tab (321e) extending at the end thereof.

13. An armrest mechanism (10) according to Claim 1, **characterized in that** the cam (24) is provided in the form of a parallelogram whose corners are rounded and the cam (24) comprises two corner parts (24a-24b) which are acute angled.

14. An armrest mechanism (10) according to Claim 1, **characterized in that** the butterfly cam (241) is embodied in a butterfly form and it comprises four corner parts which are acute angled.

15. An armrest mechanism (10) according to Claim 1, **characterized in that** said seat is a passenger seat.

## Patentansprüche

1. Eine Nocke (24), die bei den Sitzen verwendeten Armlehnen (31) zwischen einer Schließposition (I), einer ersten Übergangsposition (II), einer zweiten Übergangsposition (IV), und einer Stützposition (III) bewegt, und ein Armlehnenmechanismus (10), das für die Orientierung der genannten Nocke (24) eine Führungsöffnung (321) aufweist, **dadurch gekennzeichnet, dass** der vorgenannte Armlehnenmechanismus (10) eine Nockenwelle (23), die sich auf der Nocke (24) um sich selbst dreht, eine Transportgruppe (20), die an die vorgenannte Nockenwelle (23) verbunden und dem Fahrgestell (40) zugeordnet ist, eine Innenplatte (32), auf der sich die vorgenannte Führungsöffnung (321) befindet und die auf einer Armlehnegruppe (30) vorgesehen ist, umfasst.

2. Armlehnenmechanismus (10) nach Anspruch 1 **dadurch gekennzeichnet, dass** die Transportgruppe (20) eine Verbindungsplatte (21) für die Verbindung an das Fahrgestell (40) und die genannten Verbindungsplatte (21) mindestens ein Bohrloch (211) für die Montage umfasst.

3. Armlehnenmechanismus (10) nach Anspruch 2 **dadurch gekennzeichnet, dass** die Verbindungsplatte (21) für die lösbare Verbindung an das Fahrgestell (40) mindestens einen Fahrgestellbolzen (41) umfasst.

4. Armlehnenmechanismus (10) nach Anspruch 2 **dadurch gekennzeichnet, dass** es eine auf der Verbindungsplatte (21) vorgesehenen Drehbolzen (22) und ein Zentrierloch (212) für die Bestimmung der Position des genannten Drehbolzens (22) umfasst.

5. Armlehnenmechanismus (10) nach Anspruch 2 **dadurch gekennzeichnet, dass** es auf der Verbindungsplatte (21) ein Zentrierloch (213) für die Bestimmung der Position der Nockenwelle (23) umfasst.

6. Armlehnenmechanismus (10) nach Anspruch 1 **dadurch gekennzeichnet, dass** es ein Lagerbohrloch (33), das mit der vorgenannten Armlehnegruppe auf der Innenplatte (32) in Verbindung steht, umfasst.

7. Armlehnenmechanismus (10) nach einem der vorherigen Ansprüche **dadurch gekennzeichnet, dass** die Drehwelle (22) eine mit der Verbindungsplatte (21) verbundenen Zentrierspitze (221) und auf der anderen Seite ein Lager (34), das auf das Lagerbohrloch (33) eingestellt wird, und eine Lagerspitze (222) für das genannte Lager (34) umfasst.

8. Armlehnenmechanismus (10) nach Anspruch 1 **dadurch gekennzeichnet, dass** eine Zentrierspitze (231) auf der Seite, wo die Verbindungsplatte (21) mit der Nockenwelle (23) in Verbindung steht, und eine Nockenverbindungsspitze (232), wo die Nocke (24) verbunden ist, umfasst.

9. Armlehnenmechanismus (10) nach Anspruch 8 **dadurch gekennzeichnet, dass** es auf der genannten Nockenverbindungsspitze (232) eine Ringaufnahme (234) und einen Ring (233) umfasst, damit die Nocke (24) nicht von ihrer Position heraus kommt.

10. Armlehnenmechanismus (10) nach Anspruch 8 **dadurch gekennzeichnet, dass** es für die Montage der Armlehnengruppe (30) zu der Transportgruppe (20) mindestens einen Bolzen (70) und eine Stützunterlegscheibe (50), die zwischen dem genannten Bolzen (70) und der Innenplatte (32) vorgesehen ist, umfasst.

11. Armlehnenmechanismus (10) nach Anspruch 10 **dadurch gekennzeichnet, dass** die genannten Stützunterlegscheibe (50) so groß ausgebildet ist, dass sie die Oberfläche der Nocke (24) auf der Seite den Ring (233) vollständig bedeckt.

12. Armlehnenmechanismus (10) nach Anspruch 1 **dadurch gekennzeichnet, dass** die Führungsöffnung (321) einen geschlossen Bereich (321a), der die Bewegung der Nocke (24) orientiert, einen fortgesetzt erstreckenden Stützbereich (321c), danach einen Schwenkbereich (321d), folgend einen Übergangsbereich (321f), wieder folgend einen Übergangsbereich (321b) und am Ende einen Übergangsnase (321e) umfasst.

13. Armlehnenmechanismus (10) nach Anspruch 1 **dadurch gekennzeichnet, dass** die Nocke (24) in Form eines Parallelogramms, dessen Ecken abgerundet sind, ausgebildet ist und zwei Eckenbereiche (24a-24b) mit Spitzwinkel umfasst.

14. Armlehnenmechanismus (10) nach Anspruch 1 **dadurch gekennzeichnet, dass** die Schmetterlingnocke (241) ausgebildet in Form eines Schmetterlings vier spitzwinklige Ecken umfasst.

15. Armlehnenmechanismus (10) nach Anspruch 1 **dadurch gekennzeichnet, dass** der genannte Sitz ein Fahrgastsitz ist.

## Revendications

1. Une mécanisme d'accoudoir (10) comprenant une came (24) pouvant mouvoir le bras de l'accoudoir (31) utilisé pour les sièges entre une position fermée (I), une première position de l'accouplement (II), une deuxième position de l'accouplement (IV) et une position de soutien (III) et une ouverture de guidage (321) guidant le mouvement de ladite came (24) **caractérisée en ce que** ladite mécanisme d'accoudoir (10) comprend un arbre à came (23) positionné pouvant pivoter sur la came (24), une ensemble de butée (20) sur laquelle ledit arbre à came (23) est relié et qui est associée au châssis (40), une plaque intérieure (32) sur laquelle se trouve ladite ouverture de guidage (321) et qui est prévue sur l'ensemble d'accoudoir (30).

2. Une mécanisme d'accoudoir (10) selon la revendication 1 **caractérisée en ce qu'**elle comprend une plaque de connexion (21) avec laquelle l'ensemble de butée (20) est connectée au châssis (40) et ladite plaque de connexion (21) comprend au moins un trou de montage (211).

3. Une mécanisme d'accoudoir selon la revendication 2 **caractérisée en ce qu'**elle comprend au moins un boulon de châssis (41) pour relier la plaque de connexion (21) au châssis (40) de manière détachable.

4. Une mécanisme d'accoudoir (10) selon la revendication 2 **caractérisée en ce qu'**elle comprend un axe de pivotement (un arbre de pivot) (22) prévu sur la plaque de connexion (21) et un trou de centrage (212) définissant la position prévue pour ledit axe de pivotement (22).

5. Une mécanisme d'accoudoir (10) selon la revendication 2 **caractérisée en ce qu'**elle comprend un trou de centrage (213) définissant la position prévue pour l'arbre à came (23) sur la plaque de connexion (21).

6. Une mécanisme d'accoudoir (10) selon la revendication 1 **caractérisée en ce qu'**elle comprend un trou de palier (33) associé avec ledit ensemble d'accoudoir sur la plaque intérieure (32).

7. Une mécanisme d'accoudoir (10) selon l'une quelconque des revendications précédentes **caractérisée en ce qu'** elle comprend une extrémité de centrage (221) sur le côté de l'axe de pivotement (22) relié à la plaque de connexion (21), sur l'autre côté un palier (34) intégrant dans ledit trou de palier (33) et une extrémité de palier (222) sur laquelle est prévue ledit palier.

8. Une mécanisme d'accoudoir (10) selon la revendication 1 **caractérisée en ce qu'** elle comprend un trou de centrage (231) sur le côté de l'arbre à came (23) relié à la plaque de connexion (21), sur l'autre côté une extrémité de la connexion de came (232) sur laquelle est prévue une came (24).

9. Une mécanisme d'accoudoir (10) selon la revendication 8 **caractérisée en ce qu'** elle comprend une rainure de segment (une rainure annulaire) (234) prévenant la dislocation de la came (24) sur ladite extrémité de la connexion de came (232) et un segment (233).

10. Une mécanisme d'accoudoir (10) selon la revendication 1 **caractérisée en ce qu'** elle comprend au moins un boulon (70) assurant le montage de l'ensemble d'accoudoir (30) à l'ensemble de butée (20) et une bague de support (50) prévue entre ledit boulon (70) et la plaque intérieure (32).

11. Une mécanisme d'accoudoir (10) selon la revendication 10 **caractérisée en ce que** ladite bague de support (50) est configurée pour être suffisamment grande pour recouvrir la surface de la came (24) au côté du segment (233).

12. Une mécanisme d'accoudoir selon la revendication 1 **caractérisée en ce que** l'ouverture de guidage (321) comprend une zone de la position fermée (321a) guidant le mouvement de la came (24), suivie par une zone de support (321c), à la suite une zone de rotation (321d), suivi par un coin de l'accouplement (321f), à la suite une zone de l'accouplement (321b) et à la fin une dent d'accouplement (321e).

13. Une mécanisme d'accoudoir (10) selon la revendication 1 **caractérisée en ce que** la came (24) est prévue en forme de parallélépipède aux coins arrondis et comprend deux coins à angle aigu (24a-24b).

14. Une mécanisme d'accoudoir (10) selon la revendication 1 **caractérisée en ce que** la came papillon (241), en étant configurée en forme d'une papillon, comprend quatre coins à angle aigu.

15. Une mécanisme d'accoudoir (10) selon la revendication 1 **caractérisée en ce que** ledit siège est un siège passager.
